# EUROPEAN PATENT APPLICATION

(11) **EP 4 826 549 A1**
(43) Date of publication of application: **21.10.2026**
(21) Application number: 25227682.9
(22) Date of filing: 30.12.2025
(51) Int. Cl.: G06F 12/0804, G06F 12/128

(54) **GROUPING WRITE DATA IN WRITE-BACK CACHE TO ENHANCE DATA LOCALITY AND WRITE EFFICIENCY**

(30) Priority: 14.04.2025 US 202519178380
(71) Applicant: MediaTek Inc., Hsinchu City 30078 (TW)
(72) Inventor: WANG, Yu-Wei, 30078 Hsinchu City (TW); WANG, Po-Han, 30078 Hsinchu City (TW); YU, Kee Khuan, 30078 Hsinchu City (TW); LIAO, Sheng-Wei, 30078 Hsinchu City (TW)
(74) Representative: Haseltine Lake Kempner LLP

(57) **Abstract**

Write-back operations are grouped into a write-back group to enhance data locality. A control circuitry of a cache receives a memory access request that causes new data to be written into the cache. The cache is organized into multiple sets, and the memory access request indicates an address that belongs to a target set of the cache. The control circuitry identifies a target cache line in the target set as an evict victim. The control circuitry searches in neighboring sets of the target set to identify one or more dirty cache lines having neighboring addresses of the evict victim. The control circuitry groups write-back operations of the evict victim and the one or more dirty cache lines into one write-back group to write back to a memory.

## Description

### TECHNICAL FIELD

Embodiments of the invention relate to write-back cache memory management in a computing system.

### BACKGROUND OF THE INVENTION

A cache is a smaller, faster memory than the main memory and secondary storage, and is typically located on the same chip as the processors in a multi-processor system. Caches enhance system performance by reducing off-chip memory accesses. Caches are usually organized as a hierarchy of multiple levels, with smaller and faster caches backed up by larger and slower caches. In general, multi-level caches are accessed by checking the fastest, level-1 (L1) cache first; if there is a miss in L1, then the next fastest level-2 (L2) cache is checked, and so on. The cache that is closest to the off-chip main memory is the system level cache (SLC) and is typically shared by the processors in the system.

One of the commonly used cache maintenance policies is called the "write-back" policy. With the write-back policy, a data item updated in the cache is not immediately written back to the main memory. Thus, the data item is "dirty", i.e., newer and inconsistent with the main memory content which holds the old data content. The write to the main memory is postponed until the cache line containing the data item is about to be replaced by another cache line.

Write-back caches generally enhance system performance, as they reduce the latency and the number of external memory accesses for write operations. However, the performance of a write-back cache can be affected by memory access patterns such as the locations of the accessed data. Thus, there is a need for write operations to take into account memory access patterns to improve write efficiency.

### SUMMARY OF THE INVENTION

In one embodiment, a method is provided for grouping write-back operations. The method includes the step of receiving a memory access request that causes new data to be written into a cache organized into multiple sets. The memory access request indicates an address that belongs to a target set of the cache. The method further includes the steps of identifying a target cache line in the target set as an evict victim, and searching in neighboring sets of the target set to identify one or more dirty cache lines having neighboring addresses of the evict victim. The method further includes the step of grouping the write-back operations of the evict victim and the one or more dirty cache lines into a write-back group to write back to a memory.

In another embodiment, a system is operative to group write-back operations. The system includes processors, a memory, and a cache coupled to the processors and the memory. The cache is organized into multiple sets and includes control circuitry. The control circuitry is operative to perform the aforementioned method for grouping write-back operations.

Other aspects and features will become apparent to those ordinarily skilled in the art upon review of the following description of specific embodiments in conjunction with the accompanying figures.

### BRIEF DESCRIPTION OF DRAWINGS

The present invention is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one. Further, when a particular feature, structure, or characteristic is described in connection with an embodiment, it is submitted that it is within the knowledge of one skilled in the art to effect such feature, structure, or characteristic in connection with other embodiments whether or not explicitly described.
FIG. 1 is a block diagram illustrating a computer system operative to perform write grouping according to one embodiment.
FIG. 2 is a diagram illustrating control data of each cache line according to one embodiment.
FIG. 3 is a diagram illustrating a memory access request from a processor according to one embodiment.
FIG. 4A is a flow diagram illustrating a write-grouping process triggered by a write request according to a first embodiment.
FIG. 4B is a flow diagram illustrating a write-grouping process triggered by a read request according to a first embodiment.
FIG. 5A is a flow diagram illustrating a write-grouping process triggered by a write request according to a second embodiment.
FIG. 5B is a flow diagram illustrating a write-grouping process triggered by a read request according to a second embodiment.
FIG. 6 is a block diagram illustrating a write-back cache including a last-evict buffer according to one embodiment.
FIG. 7 is a flow diagram illustrating a write-grouping process handling an internal request according to the second embodiment of FIG. 5.
FIG. 8 is a flow diagram illustrating a method for grouping write-back operations into one write-back group according to one embodiment.

### DETAILED DESCRIPTION OF THE INVENTION

In the following description, numerous specific details are set forth. However, it is understood that embodiments of the invention may be practiced without these specific details. In other instances, well-known circuits, structures, and techniques have not been shown in detail in order not to obscure the understanding of this description. It will be appreciated, however, by one skilled in the art, that the invention may be practiced without such specific details. Those of ordinary skill in the art, with the included descriptions, will be able to implement appropriate functionality without undue experimentation.

This disclosure describes a write grouping mechanism for enhancing both temporal locality and spatial locality of write-back operations from a cache to a memory. When a dirty cache line is evicted from the cache, the write grouping mechanism searches neighboring sets of the cache for dirty neighboring cache lines. These dirty neighboring cache lines, if any is found, are written back to the memory with the evicted dirty cache line in one or more groups. After the write back, the cache state of these dirty neighboring cache lines is changed from dirty to clean (i.e., non-dirty).

When a processor writes data of sequential addresses to the memory, the write sequence may be broken up by cache write-back operations due to the cache replacement policy. According to the replacement policy, a cache may choose an evict victim based on replacement priorities of all cache lines in the cache. There is no guarantee that all sequentially-addressed write data are to be written back in sequence. The write grouping method and system described herein enable a cache to group the write-back operations of the evict victim and the neighboring cache lines into a group within a command size limit. The write-back operations may be grouped into more than one group when the number of write-back cache lines exceeds the command size limit.

As used herein, the term "neighboring address" includes but is not limited to numerically sequential addresses, and the term "spatial locality" includes but is not limited to physically consecutive memory cells. For example, for writing back to a dynamic random-access memory (DRAM), neighboring addresses may be those addresses that fall in the same page. Two addresses are neighboring addresses if they share a DRAM row buffer in a write-back operation. Although DRAM is used as an example, the term "memory" as used herein is not limited to DRAM. Non-limiting examples of memory include static random-access memory (SRAM), DRAM, embedded DRAM (eDRAM), embedded multi-media card (eMMC), NOR Flash, NAND Flash, volatile memory, non-volatile memory, etc. In the following description, the terms "request" and "command" are used interchangeably.

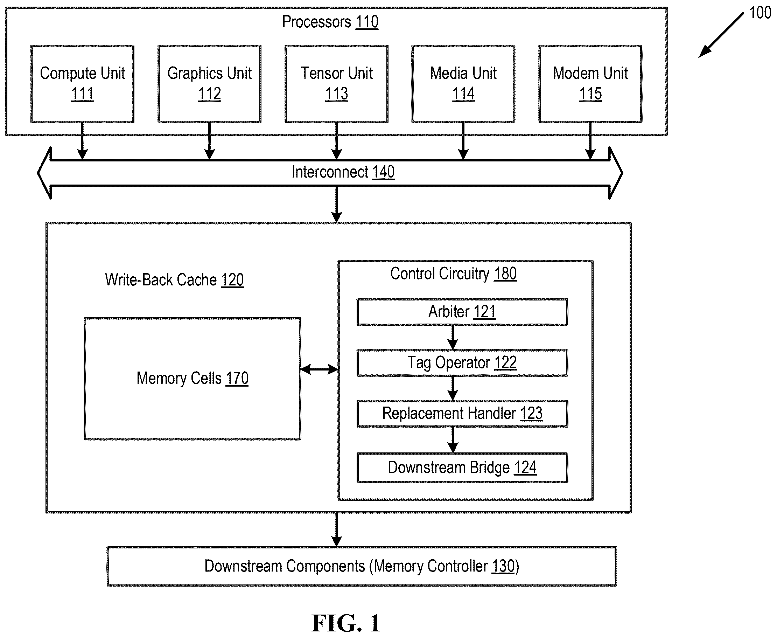

FIG. 1 is a block diagram illustrating a computer system 100 operative to perform write grouping according to one embodiment. The computer system 100 includes multiple processors 110 such as a computer unit 111, a graphics unit 112, a tensor unit 113, a media unit 114, a modem unit 115, etc., all of which are coupled to a write-back cache 120 (hereinafter, the cache 120) via an interconnect 140. A non-limiting example of the cache 120 is a system-level cache (SLC). The processors 110 may include additional caches at different levels of the cache hierarchy. In one embodiment, the processors 110 and the cache 120 may be co-located on the same chip in a system-on-a-chip (SoC) configuration. The cache 120 is further coupled to downstream components such as a memory controller 130 that controls access to downstream memory, such as a memory device of SRAM, DRAM, eDRAM, eMMC, NOR Flash, NAND Flash, volatile memory, non-volatile memory, etc. It is understood that the system 100 may include additional circuitry, e.g., I/O circuitry, network circuitry, etc., which is not shown to simplify the illustration. The arrows between components in FIG. 1 show the direction of memory access operations. It is understood that the communication between the components can be bi-directional.

In one embodiment, the cache 120 may be an N-way set associative cache, where N is a positive integer. Memory address of a byte includes three parts: tag, index, and offset. The offset specifies the byte within a cache line, and the index specifies the set in which the byte resides. For example, a cache line may store 64 bytes of data. Cache lines having the same index are mapped to the same set, and each set can store N cache lines for an N-way set associative cache. Each cache line is identified by tag and set. Each cache line is stored in a set with its tag. Each cache line has an indicator to indicate its cache state according to a cache coherence protocol; e.g., MESI, MOESI, etc., where M stands for modified, O for owned, E for exclusive, S for shared, and I for invalid. When a processor writes data into a cache line, the state of the cache line changes to "modified," which means that the cache line is dirty, i.e., not coherence with the data content in the main memory. A non-dirty cache line may be indicated by "shared", "clean-shared", or another state, depending on the cache coherence protocol. Cache coherence protocols are well known in the art and are not elaborated herein.

In one embodiment, the cache 120 includes memory cells 170 to store cached data, and control circuitry 180 to manage cache allocation, replacement, and write-back operations. The control circuitry 180 includes an arbiter 121, a tag operator 122, a replacement handler 123, and a downstream bridge 124. The arbiter 121 determines which pending requests are granted for accessing the cache 120 and the order of the cache access. The tag operator 122 compares the tag of new data in a read/write request with the existing tags in the cache 120 to determine whether there is a hit or a miss. A hit means that a processor can read from or write into the "hit" cache line without accessing the downstream memory. If there is a miss, the replacement handler 123 evicts one of the existing cache lines and replaces it with new data.

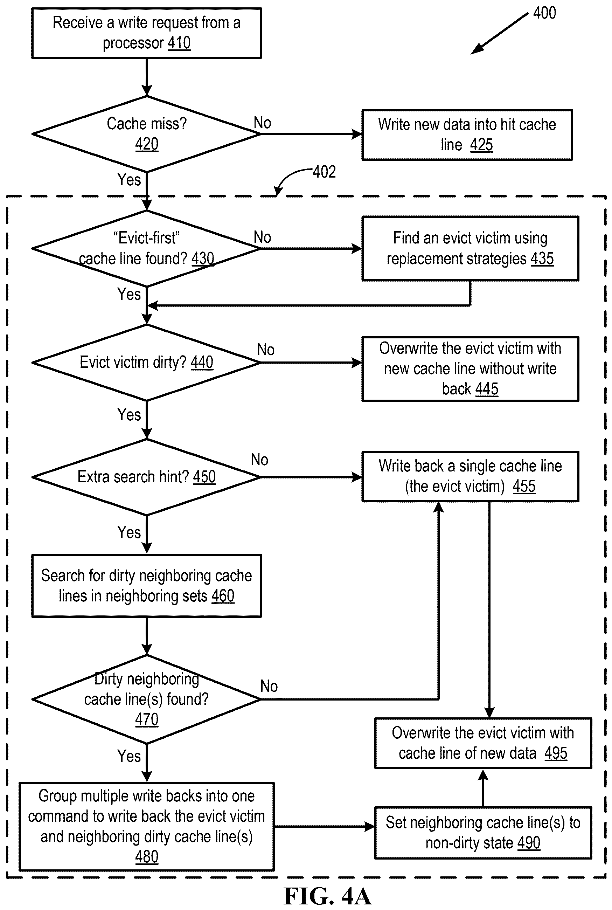

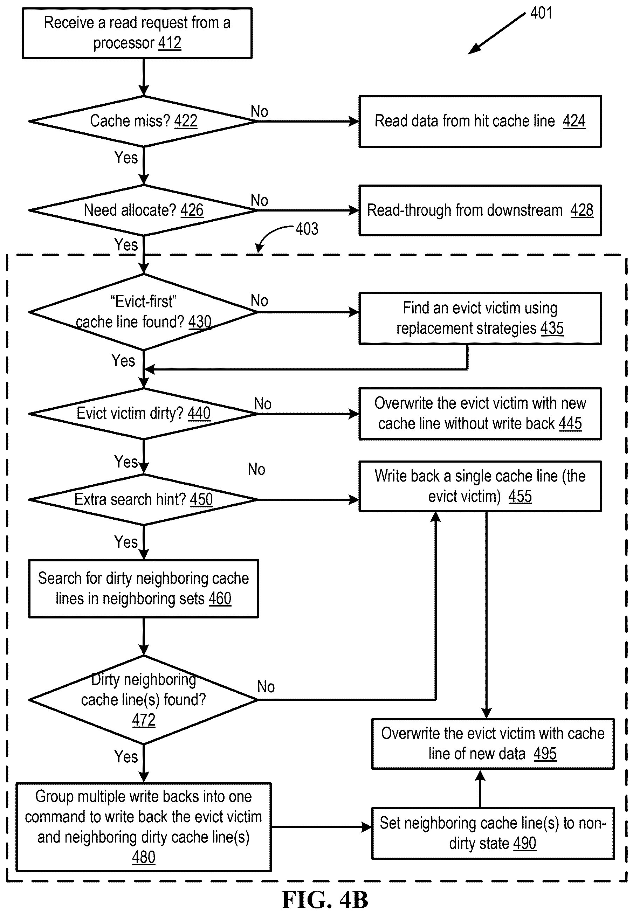

When the control circuitry 180 identifies a cache line to be evicted, it sends a write-back command to the memory controller 130 via the downstream bridge 124 to write back the evicted cache line (also referred to as the evict victim) to the downstream memory. In one embodiment, the write-back of an evict victim may be grouped with the write-back of its dirty neighboring cache lines to improve the write efficiency. The write grouping will be described in further detail with reference to FIG. 4 - FIG. 7.

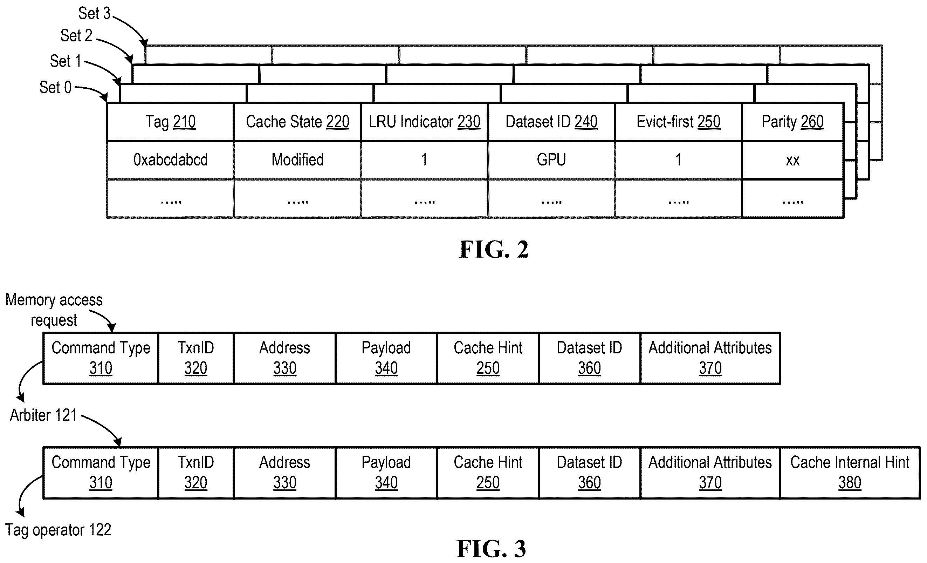

FIG. 2 is a diagram illustrating control data of each cache line according to one embodiment. In this example, the control data of a cache line is a bit sequence including a tag 210, cache state 220 (e.g., the MOESI state), a least recently-used (LRU) indicator 230, dataset ID 240, an evict-first bit 250, and one or more parity bits 260. The evict-first bit 250 and the LRU indicator 230 are used to determine whether the corresponding cache line is to be chosen for eviction when there is a cache miss. The LRU indicator 230 of a cache line indicates whether the cache line is least recently accessed. When the evict-first bit 250 is turned on (e.g., set to one), it indicates that the cache line is to be evicted before another cache line that is least-recently used. The example of FIG. 2 shows that the cache lines are arranged into four sets (e.g., set 0, set 1, set 2, and set 3). For example, when a write request causes a cache miss in a set (e.g., set 0), the control circuitry 180 (FIG. 1) first examines the evict-first bit 250 of the cache lines in set 0. If a cache line in set 0 is found with the evict-first bit 250 turned on, that cache line is to be evicted regardless of the status of its LRU indicator 230.

In one embodiment, the evict-first bit 250 of a cache line is turned on when a processor's write request indicates a non-allocate write. To describe the evict-first bit 250, it is helpful to first explain allocate write vs. non-allocate write. An "allocate write" refers to a write operation that causes the allocation of a cache line. In some embodiments, when an allocate write request causes a cache miss at the cache 120, the control circuitry 180 identifies an evict victim and searches for neighboring addresses in neighborhood sets of the evict victim. If there is any neighboring cache line with a dirty state in the neighborhood sets, the control circuitry 180 can combine the write-back operations of the evict victim and the dirty neighboring cache line(s) into a group to enhance write locality.

A precondition of the write grouping is that data is allocated in the cache. To further enhance the locality of the entire system, non-allocate write requests are handled as forced allocations. An example of non-allocate write is streaming write. Modern computer architectures can detect sequential writes, which is called streaming write. An example of streaming write occurs when software sequentially writes zeros to a region of memory to initialize that region. Streaming write is usually considered as polluting the cache, so streaming write is non-allocate in most caches. However, non-allocate write requests have some drawbacks. First, a non-allocate write request wakes up downstream components such as the main memory. Second, non-allocate write requests may not preserve write locality due to the read/write command reordering in the memory infrastructure.

In one embodiment, a "forced allocation" is performed to overwrite an upstream cache hint from "non-allocate" to "allocate." To alleviate the cache pollution problem, an "evict-first" hint is added to the write request of a cache line that is allocated by forced allocation. The cache line allocated with an "evict-first" hint has its evict-first bit 250 turned on.

FIG. 3 is a diagram illustrating a memory access request from a processor according to one embodiment. The memory access request includes a command type 310 (e.g., read or write), transaction ID 320, address 330, payload 340 (e.g., data contents), cache hints 350 (e.g., allocate or non-allocate, grouping condition, etc.), dataset ID 360, and additional attributes 370. When the arbiter 121 receives a write request with a non-allocate cache hint 350, the arbiter 121 appends a cache internal hint 380 indicating "evict first." Then a cache line is forced allocated to the write request according to the address 330, and the allocated cache line has its "evict-first" bit 250 turned on. In one embodiment, the arbiter 121 also checks a grouping condition in the cache hints 350 to determine whether write grouping applies to this cache line. The grouping condition is configurable such that the write grouping can be turned on and off. If the grouping condition is turned on, the arbiter 121 appends another cache internal hint 380 indicating "extra search." The memory access request including the cache internal hint 380 is forwarded to the tag operator 122 for further process.

FIG. 4A is a flow diagram illustrating a write-grouping process 400 triggered by a write request according to a first embodiment. Referring also to FIG. 1, the process 400 starts at step 410 when the control circuitry 180 of the cache 120 receives a write request from a processor. The write request indicates a requested address of new data and has the format illustrated in FIG. 3. The write request may be an allocate write request, or a non-allocate write request converted by the arbiter 121 to forced allocation. If the write request is a hit at step 420, the new data is written into the "hit" cache line at step 425, and no write-back is performed. If the write request causes a cache miss at step 420, the process 400 proceeds to the steps in a dashed block 402 where write-grouping operations are performed.

Subsequent to the cache miss at step 420, the control circuitry 180 at step 430 searches the cache 120 in the same set as the requested address for a cache line that has the evict-first bit turned on. This evict-first cache line is identified as the evict victim. If no evict-first cache line can be found at step 430, a cache line that is least recently used (or according to another replacement strategy) is identified as the evict victim at step 435. At step 440, the control circuitry 180 checks whether the evict victim is dirty. If the evict victim is not dirty, then no write back is performed. The evict victim is overwritten by the new data at step 445. If the evict victim is dirty, the control circuitry 180 at step 450 further checks whether the write request includes an extra search hint. If the request includes an extra search hint, the control circuitry 180 further searches for dirty neighboring cache lines in the neighboring sets at step 460. If the request does not include an extra search hint, the control circuitry 180 at step 455 writes back a single cache line, which is the evict victim. If at step 470 one or more dirty neighboring cache lines are found, the control circuitry 180 at step 480 groups the write-back of the evict victim and the one or more dirty neighboring cache lines into one write-back command, and sends the write-back command to the downstream memory. If the number of cache lines to be written back exceeds a command size limit, these cache lines may be grouped into more than one write-back command. The control circuitry 180 then at step 490 sets the one or more dirty neighboring cache lines to a non-dirty state according to the cache coherency protocol used by the system. These neighboring cache lines can remain in the cache. If at step 470 no dirty neighboring cache line is found, the control circuitry 180 at step 455 writes back a single cache line, which is the evict victim. Step 455 and step 490 both proceed to step 495 at which the evict victim is overwritten (i.e., replaced) by a cache line of new data according to the processor's write request.

FIG. 4B is a flow diagram illustrating a write-grouping process 401 triggered by a read request according to a first embodiment. Referring also to FIG. 1, the process 401 starts at step 412 when the control circuitry 180 of the cache 120 receives a read request from a processor. The read request indicates a requested address and has the format illustrated in FIG. 3. If the read request is a hit at step 422, the control circuitry 180 reads data from the "hit" cache line at step 424. If the read request is a miss at step 422 and is a non-allocate read at step 426, the control circuitry 180 performs read-through from a downstream memory at step 428. If the read request is a miss at step 422 and is an allocate read at step 426, the process 401 proceeds to the steps in a dashed block 403 where write-grouping operations are performed. The steps in block 403 are the same as the steps in block 402 of FIG. 4A, except that the new data in block 403 refers to the requested read data while the new data in block 402 refers to the requested write data.

In a second embodiment, the write grouping may be performed in a series of write-back commands, and each write-back command writes back a single cache line. All of these write-back commands are sent from the cache 120 to the memory controller 130 of the downstream memory in a quick succession, e.g., in a burst. That is, a write-back group in the first embodiment refers to a write-back command that writes back a data chunk of multiple cache lines. A write-back group in the second embodiment refers to a series of single-cache-line write-back commands that are sent to the downstream memory controller in a burst. A series of single-cache-line write-back commands in a burst can be performed as efficiently as a single write-back command that writes back a data chunk of multiple cache lines. This is because in both cases, the page (e.g., in DRAM) for storing the cache lines only needs to be activated once at the beginning of the write-back and closed once at the end of the write-back. If these write-backs are separated by write-backs to non-neighboring addresses, the page for storing the cache lines may need to be activated and closed for each single cache line. Thus, both the first embodiment and the second embodiment can enhance the temporal and spatial localities of write-back operations.

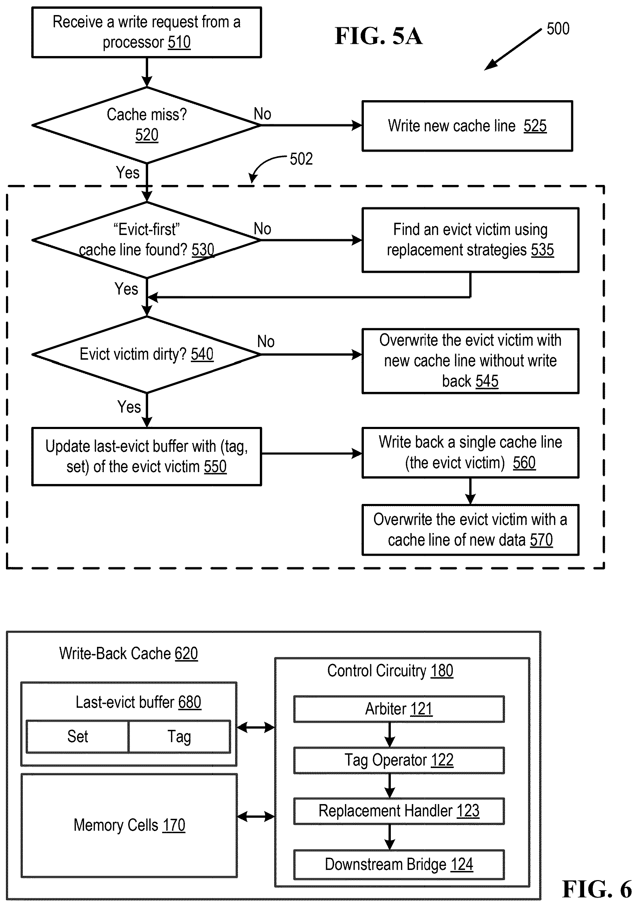

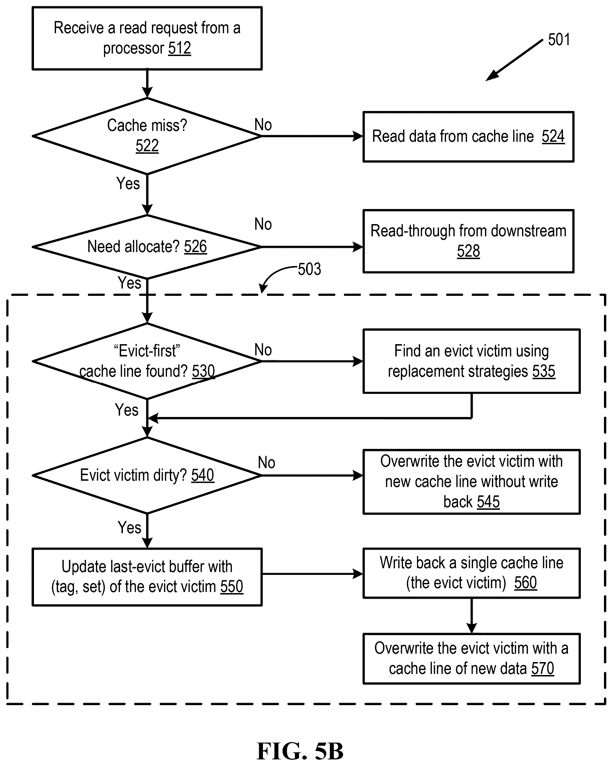

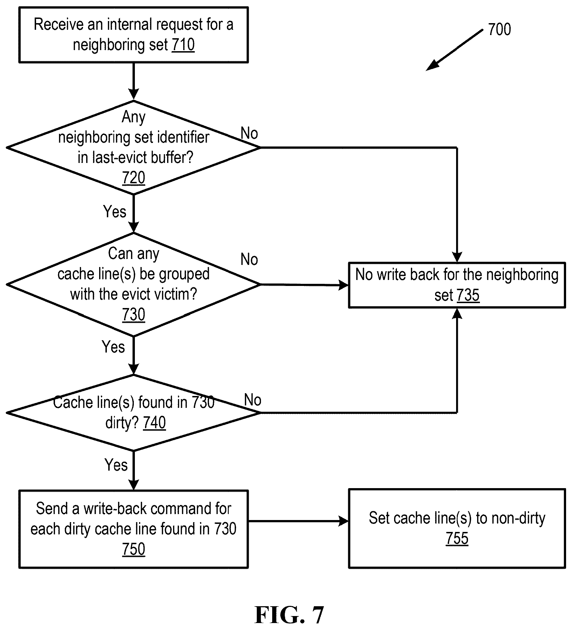

In the second embodiment, when the cache internal hint 380 (FIG. 3) of a write request indicates extra search, the arbiter 121 (FIG. 1) sends internal requests to the tag operator 122, requesting the tag operator 122 to conduct extra searches in neighboring sets of the requested address (which is the same as the neighboring sets of the evict victim). The term "internal" refers to "internal to the cache", as opposed to "external", which means external to the cache 120. In the following, FIG. 5 and FIG. 7 describe the processes for handling an external request (e.g., a processor's write request) and the internal requests, respectively, according to the second embodiment.

FIG. 5A is a flow diagram illustrating a write-grouping process 500 triggered by a write request according to the second embodiment. Steps 510, 520, 525, 530, 535, 540, and 545 are the same as steps 410, 420, 425, 430, 435, 440, and 445 in FIG. 4A. The steps after the cache miss step 520 are shown in a dashed block 502 where write-grouping operations are performed. At step 550 where a processor's write request causes a cache miss, an evict-first cache line is found, and the evict victim is dirty, the control circuitry 180 updates a last-evict buffer with the (set, tag) of the evict victim. An example of a last-evict buffer is described with reference to FIG. 6. The process 500 then proceeds to step 560 at which the control circuitry 180 writes back a single cache line, which is the evict victim. At step 570, the control circuitry 180 overwrites the evict victim with a cache line of new data according to the processor's write request.

FIG. 5B is a flow diagram illustrating a write-grouping process 501 triggered by a read request according to the second embodiment. Steps 512, 522, 524, 526, and 528 are the same as steps 412, 422, 424, 426, and 428 in FIG. 4B. The steps after the allocation step 526 are shown in a dashed block 503 where write-grouping operations are performed. The steps in block 503 are the same as the steps in block 502 of FIG. 5A, except that the new data in block 503 refers to the requested read data while the new data in block 502 refers to the requested write data.

FIG. 6 is a block diagram illustrating a write-back cache 620 including a last-evict buffer 680 according to one embodiment. The write-back cache 620 has the same components as the write-back cache 120 in FIG. 1, except that the write-back cache 620 additionally includes the last-evict buffer 680. The last-evict buffer 680 stores an identifier of the cache line that is most recently evicted from the write back cache 620. In one embodiment, the identifier is the (set, tag) of that cache line. In one embodiment, the depth of the last-evict buffer 680 depends on the number of stages in the cache's pipeline, which stores the results of all in-flight tag-lookup requests. Thus, when the tag operator 122 receives an internal request from the arbiter 121 for extra search in a given set, the search can be based on the evict victim's (set, tag) stored in the last-evict buffer 680.

FIG. 7 is a flow diagram illustrating a write-grouping process 700 handling an internal request according to the second embodiment of FIG. 5. The process 700 may be performed for each neighboring set of the evict victim. Referring also to FIG. 6, the process 700 starts at step 710 when the control circuitry 180 receives an internal request for extra search in a neighboring set of the evict victim. The neighboring sets may include but are not limited to one or more immediately adjacent sets of the evict victim, and the number of neighboring sets subject to the extra search may be configurable. For example, if the evict victim is in set 1, the neighboring sets subject to the extra search in one case may include set 0, set 2, and set 3, or in another case may include one set only (e.g., set 0 or set 2). The control circuitry 180 at step 720 checks whether the last-evict buffer 680 stores an identifier of a neighboring set. If the identifier stored in the last-evict buffer 680 identifies a neighboring set, e.g., the stored (set, tag) = (neighboring set, tag), the control circuitry 180 at step 730 searches in the neighboring set using the tag address identified in (neighboring set, tag) for any cache lines that can be grouped with the evict victim in write-back operations. Cache lines that can be grouped with the evict victim are the neighboring cache lines of the evict victim. If the last-evict buffer 680 does not store an identifier of a neighboring set or if the neighboring set does not have any cache lines that can be grouped with the evict victim, the process 700 proceeds to step 735 where no write back is performed for that neighboring set. At step 740, the control circuitry 180 determines whether the cache line(s) found at step 730 is dirty. If any dirty cache lines are found, the control circuitry 180 at step 750 sends a write-back command to the memory for each of these dirty cache lines, and sets the cache lines to non-dirty. If none of the cache lines found at step 730 are dirty, the process 700 proceeds to step 735 where no write back is performed for that neighboring set. The process 700 may be repeated for each neighboring set of the evict victim.

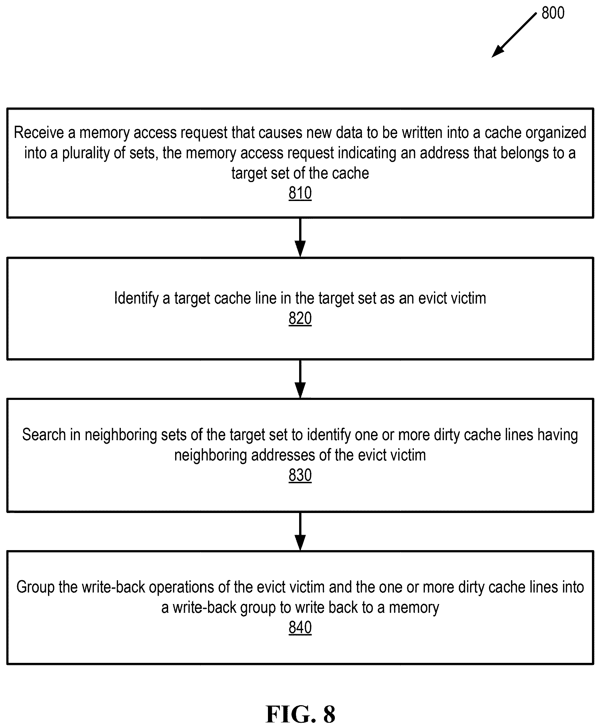

FIG. 8 is a flow diagram illustrating a method 800 for grouping write-back operations according to one embodiment. The method 800 may be performed by the system 100 in FIG. 1, where the system 100 includes the write-back cache 120 in FIG. 1 or the write-back cache 620 in FIG. 6. The method 800 starts at step 810 when the system receives a memory access request that causes new data to be written into a cache. The cache is organized into multiple sets. The memory access request indicates an address that belongs to a target set of the cache. The system at step 820 identifies a target cache line in the target set as an evict victim. The system at step 830 searches in neighboring sets of the target set to identify one or more dirty cache lines having neighboring addresses of the evict victim. The system at step 840 groups the write-back operations of the evict victim and the one or more dirty cache lines into a write-back group to write back to a memory.

In one embodiment, when grouping the write-back operations, the control circuitry of the cache sends to the memory one write-back command including the evict victim and the one or more dirty cache lines. In another embodiment, when grouping the write-back operations, the control circuitry of the cache sends to the memory a series of write-back commands in a burst with each write back command including a single cache line.

In one embodiment, the control circuitry stores identifiers of a tag and a set of a most-recently evict victim in a buffer, and searches for the neighboring addresses in the neighboring sets based on the identifiers of the tag and the set. In one embodiment, when grouping the write-back operations, the one or more dirty cache lines are kept in the cache after the write-back operations. The cache state of the one or more dirty cache lines are changed from dirty to non-dirty.

In one embodiment, when the received memory access request is a non-allocate write request, the control circuitry turns on an evict-first bit in a cache line of the new data. A dirty cache line in the target set that has the evict-first bit turned on is identified as the evict victim. When no dirty cache line that has the evict-first bit turned on is found in the target set, the control circuitry identifies the evict victim according to a replacement policy of the cache.

In one embodiment, the neighboring addresses include memory addresses that belong to a same page in the memory. Alternatively or additionally, the neighboring addresses include memory addresses that are numerically consecutive.

The operations of the flow diagrams of FIG. 4A, FIG. 4B, FIG. 5A, FIG. 5B, FIG. 7 and FIG. 8 have been described with reference to the exemplary embodiment of FIG. 1. However, it should be understood that the operations of the flow diagrams can be performed by embodiments of the invention other than the embodiment of FIG. 1, and the embodiment of FIG. 1 can perform operations different than those discussed with reference to the flow diagrams. It is understood that the order of operations shown in the flow diagrams is a non-limiting example. Alternative embodiments may perform the operations in a different order, combine certain operations, overlap certain operations, etc.

Various functional components or blocks have been described herein. As will be appreciated by persons skilled in the art, the functional blocks will preferably be implemented through circuits (either dedicated circuits or general-purpose circuits, which operate under the control of one or more processors and coded instructions), which will typically comprise transistors that are configured in such a way as to control the operation of the circuitry in accordance with the functions and operations described herein.

While the invention has been described in terms of several embodiments, those skilled in the art will recognize that the invention is not limited to the embodiments described, and can be practiced with modification and alteration within the spirit and scope of the appended claims. The description is thus to be regarded as illustrative instead of limiting.

Embodiments of the invention are set out in the following numbered Embodiments of the invention are set out in the following numbered clauses:
1. A method for grouping write-back operations, comprising: receiving a memory access request that causes new data to be written into a cache organized into a plurality of sets, the memory access request indicating an address that belongs to a target set of the cache; identifying a target cache line in the target set as an evict victim; searching in neighboring sets of the target set to identify one or more dirty cache lines having neighboring addresses of the evict victim; and grouping the write-back operations of the evict victim and the one or more dirty cache lines into a write-back group to write back to a memory.
2. The method of clause 1, wherein grouping the write-back operations further comprises:
   sending from the cache to the memory one write-back command including the evict victim and the one or more dirty cache lines.
3. The method of clause 1, wherein grouping the write-back operations further comprises sending from the cache to the memory a series of write-back commands in a burst with each write back command including a single cache line.
4. The method of clause 1, further comprising: storing identifiers of a tag and a set of a most-recently evict victim in a buffer; and searching for the neighboring addresses in the neighboring sets based on the identifiers of the tag and the set.
5. The method of clause 1, wherein grouping the write-back operations further comprises: keeping the one or more dirty cache lines in the cache after the write-back operations; and changing a cache state of the one or more dirty cache lines from dirty to non-dirty.
6. The method of clause 1, wherein receiving the memory access request further comprises: identifying the memory access request to be a non-allocate write request; and turning on an evict-first bit in a cache line of the new data.
7. The method of clause 6, further comprising: identifying a dirty cache line in the target set that has the evict-first bit turned on as the evict victim.
8. The method of clause 6, further comprising: when no dirty cache line that has the evict-first bit turned on is found in the target set, identifying the evict victim according to a replacement policy of the cache.
9. The method of clause 1, wherein the neighboring addresses include memory addresses that belong to a same page in the memory.
10. The method of clause 1, wherein the neighboring addresses include memory addresses that are numerically consecutive.
11. A system operative to group write-back operations, comprising: a plurality of processors; a memory; and a cache coupled to the processors and the memory, wherein the cache is organized into a plurality of sets and includes control circuitry operative to: receive a memory access request that causes new data to be written into the cache, the memory access request indicating an address that belongs to a target set of the cache; identify a target cache line in the target set as an evict victim; search in neighboring sets of the target set to identify one or more dirty cache lines having neighboring addresses of the evict victim; and group the write-back operations of the evict victim and the one or more dirty cache lines into a write-back group to write back to the memory.
12. The system of clause 11, wherein, when grouping the write-back operations, the control circuitry is further operative to: send from the cache to the memory one write-back command including the evict victim and the one or more dirty cache lines.
13. The system of clause 11, wherein, when grouping the write-back operations, the control circuitry is further operative to:send from the cache to the memory a series of write-back commands in a burst with each write back command including a single cache line.
14. The system of clause 11, wherein the control circuitry is further operative to:
   store identifiers of a tag and a set of a most-recently evict victim in a buffer; and searching for the neighboring addresses in the neighboring sets based on the identifiers of the tag and the set.
15. The system of clause 11, wherein, when grouping the write-back operations, the control circuitry is further operative to: keep the one or more dirty cache lines in the cache after the write-back operations; and change a cache state of the one or more dirty cache lines from dirty to non-dirty.
16. The system of clause 11, wherein, when receiving the memory access request, the control circuitry is further operative to: identify the memory access request to be a non-allocate write request; and turn on an evict-first bit in a cache line of the new data.
17. The system of clause 16, wherein the control circuitry is further operative to: identify a dirty cache line in the target set that has the evict-first bit turned on as the evict victim.
18. The system of clause 16, wherein the control circuitry is further operative to:
   when no dirty cache line that has the evict-first bit turned on is found in the target set, identify the evict victim according to a replacement policy of the cache.
19. The system of clause 11, wherein the neighboring addresses include memory addresses that belong to a same page in the memory.
20. The system of clause 11, wherein the neighboring addresses include memory addresses that are numerically consecutive.

## Claims

1. A method (800) for grouping write-back operations, comprising:
receiving a memory access request that causes new data to be written into a cache (120, 620) organized into a plurality of sets, the memory access request indicating an address (330) that belongs to a target set of the cache (120, 620);
identifying a target cache (120, 620) line in the target set as an evict victim;
searching in neighboring sets of the target set to identify one or more dirty cache (120, 620) lines having neighboring addresses of the evict victim; and
grouping the write-back operations of the evict victim and the one or more dirty cache (120, 620) lines into a write-back group to write back to a memory.

2. The method (800) of claim 1, wherein grouping the write-back operations further comprises:
sending from the cache (120, 620) to the memory one write-back command including the evict victim and the one or more dirty cache (120, 620) lines; or.
wherein grouping the write-back operations further comprises:
sending from the cache (120, 620) to the memory a series of write-back commands in a burst with each write back command including a single cache (120, 620) line.

3. The method (800) of claim 1, further comprising:
storing identifiers of a tag (210) and a set of a most-recently evict victim in a buffer; and
searching for the neighboring addresses in the neighboring sets based on the identifiers of the tag (210) and the set.

4. The method (800) of claim 1, wherein grouping the write-back operations further comprises:
keeping the one or more dirty cache (120, 620) lines in the cache (120, 620) after the write-back operations; and
changing a cache state (220) of the one or more dirty cache (120, 620) lines from dirty to non-dirty.

5. The method (800) of claim 1, wherein receiving the memory access request (310) further comprises:
identifying the memory access request (310) to be a non-allocate write request; and
turning on an evict-first bit (250) in a cache (120, 620) line of the new data.

6. The method (800) of claim 5, further comprising:
identifying a dirty cache (120, 620) line in the target set that has the evict-first bit (250) turned on as the evict victim.

7. The method (800) of claim 5, further comprising:
when no dirty cache (120, 620) line that has the evict-first bit (250) turned on is found in the target set, identifying the evict victim according to a replacement policy of the cache (120, 620).

8. A system (100) operative to group write-back operations, comprising:
a plurality of processors (110);
a memory; and
a cache (120, 620) coupled to the processors (110) and the memory, wherein the cache (120, 620) is organized into a plurality of sets and includes control circuitry (180) operative to:
receive a memory access request (310) that causes new data to be written into the cache (120, 620), the memory access request (310) indicating an address (330) that belongs to a target set of the cache (120, 620);
identify a target cache (120, 620) line in the target set as an evict victim;
search in neighboring sets of the target set to identify one or more dirty cache (120, 620) lines having neighboring addresses of the evict victim; and
group the write-back operations of the evict victim and the one or more dirty cache (120, 620) lines into a write-back group to write back to the memory.

9. The system (100) of claim 8, wherein, when grouping the write-back operations, the control circuitry (180) is further operative to:
send from the cache (120, 620) to the memory one write-back command including the evict victim and the one or more dirty cache (120, 620) lines; or. wherein, when grouping the write-back operations, the control circuitry (180) is further operative to:
send from the cache (120, 620) to the memory a series of write-back commands in a burst with each write back command including a single cache (120, 620) line.

10. The system (100) of claim 8, wherein the control circuitry (180) is further operative to:
store identifiers of a tag (210) and a set of a most-recently evict victim in a buffer; and
searching for the neighboring addresses in the neighboring sets based on the identifiers of the tag (210) and the set (2, 3).

11. The system (100) of claim 8, wherein, when grouping the write-back operations, the control circuitry (180) is further operative to:
keep the one or more dirty cache (120, 620) lines in the cache (120, 620) after the write-back operations; and
change a cache state (220) of the one or more dirty cache (120, 620) lines from dirty to non-dirty.

12. The system (100) of claim 8, wherein, when receiving the memory access request (310), the control circuitry (180) is further operative to:
identify the memory access request (310) to be a non-allocate write request; and
turn on an evict-first bit (250) in a cache (120, 620) line of the new data.

13. The system (100) of claim 12, wherein the control circuitry (180) is further operative to:
identify a dirty cache (120, 620) line in the target set that has the evict-first bit (250) turned on as the evict victim.

14. The system (100) of claim 12, wherein the control circuitry (180) is further operative to:
when no dirty cache (120, 620) line that has the evict-first bit (250) turned on is found in the target set identify the evict victim according to a replacement policy of the cache (120, 620).
